# EUROPÄISCHE PATENTSCHRIFT

(11) **EP 1 288 524 B1**
(45) Veröffentlichungstag und Bekanntmachung des Hinweises auf die Patenterteilung: **05.10.2005**
(21) Anmeldenummer: 02015983.6
(22) Anmeldetag: 18.07.2002
(51) Int. Cl.: F16F 9/02, A47C 3/30, A47C 1/024

(54) **Auslöseeinrichtung für ein Kolben-Zylinderaggregat**
Triggering device for a piston-cylinder unit
Dispositif de déclenchement pour un ensemble piston-cylindre

(30) Priorität: 03.09.2001 DE 10142883
(43) Veröffentlichungstag der Anmeldung: 05.03.2003
(73) Patentinhaber: Stabilus GmbH, D-56070 Koblenz (DE)
(72) Erfinder: Knopp, Axel, 56337 Eitelborn (DE); Enders, Stephan, 56072 Koblenz (DE); Metzdorf, Manfred, 56077 Koblenz (DE)
(74) Vertreter: Klein, Thomas

(56) Entgegenhaltungen:
- EP-A- 0 423 828
- DE-A- 1 654 253
- DE-A- 2 035 068
- DE-A- 4 007 179
- DE-A- 19 528 649
- DE-B- 1 291 568
- US-A- 4 915 364
- US-A- 5 014 966

## Beschreibung

Die Erfindung betrifft eine Gasfeder nach dem Oberbegriff von Patentanspruch 1.

Blockierbare Gasfeder werden u. a. bei Stühlen eingesetzt, die eine Rückenlehne aufweisen, die einerseits federnd gelagert und andererseits über die Blockierfunktion der Gasfeder starr gehalten werden können. Ein Stuhlbenutzer sitzt aber nicht ständig mit derselben Körperhaltung auf dem Stuhl. Mit der Auslöseeinrichtung kann die Rückenlehnenposition sehr leicht der momentanen Sitzposition angepasst werden. Dabei kann z. B. der Fall auftreten, dass die Person nach vorn gebeugt sitzt und die Rückenlehne keinen Kontakt zum Rücken der Person hält. Wird die Auslöseeinrichtung für die Gasfeder an der Rückenlehne betätigt, so wird die Rückenlehne von der Gasfeder in Richtung des Rückens beschleunigt und trifft auf diesen auf. Dieses Betriebsverhalten kann als unangenehm empfunden werden. Bereits vor geraumer Zeit hat man in der DE 69 35 911 U1 eine Gasfeder beschrieben, die einen geteilten Auslösestößel aufweist, wobei zwischen den beiden Auslösestößel-Abschnitten eine Feder angeordnet ist. Mit der Feder wird ein langsameres Öffnen des Blockierventils innerhalb der Gasfeder erreicht.

Ein ähnlicher Weg ist in der DE 36 15 688 A1 beschrieben. Über den Hubweg des Auslösestößels verändert sich der Ventilquerschnitt. Die damit verbundene Drosselung lässt die Kolbenstange nur langsam und dann zunehmend schneller ausfahren. Mit beiden Gasfedertypen wird ein unangenehmes Anschlagen der Rückenlehne zwar abgeschwächt, jedoch keinesfalls zuverlässig verhindert.

Die DE 195 28 649 A1 betrifft eine Auslöseeinrichtung, die zwei Schalteingänge aufweist. Zum einen kann über einen Bowdenzug der Auslösestößel angesteuert werden. Zusätzlich steht der Sitzträger ebenfalls mit der Auslöseinrichtung in der Form in Wirkverbindung, so dass bei einem entlasteten Sitzträger unabhängig von dem Schaltzustand des Bowdenzuges an der Gasfeder stets die unblockierte Betriebsfunktion eingenommen wird. Dazu dient eine als Wippe ausgeführte Auslösevorrichtung, die direkt auf den Auslösestößel einwirkt. Wesentlich ist, dass die Sitzplatte für die Erfassung des Belastungszustandes eine Schwenkbewegung durchführen können muss. Damit ist wiederum eine eingeschränkte Stuhlkonstruktion verbunden. Komfortable Stühle verfügen häufig über eine Sitzneigungsverstellung. Eine derartige Sitzneigungsverstellung hätte einen erheblichen Einfluss auf die Funktion der Auslöseeinrichtung.

Aus der EP 0 423 828 A ist eine Gasfeder der eingangs genannten Art, also nach dem Oberbegriff von Anspruch 1 bekannt.

Aufgabe der vorliegenden Erfindung ist es, bei einem Kolben-Zylinderaggregat, insbesondere einer Gasfeder eine hubunabhängige gebremste Betriebsbewegung zu erreichen.

Erfindungsgemäß wird die Aufgabe dadurch gelöst, dass die Lastkontakteinrichtung so ausgebildet ist, dass sie bei einer belasteten Gasfeder die Betätigungseinrichtung mit der Ventileinrichtung verbindet, und dass bei unbelasteter Gasfeder die Ventileinrichtung nicht umgeschaltet werden kann.

In der Anwendung bei einem Stuhl verbindet sich mit der Lastkontakteinrichtung für einen Stuhlbenutzer der Vorteil, dass dann, wenn die Rückenlehne nicht am Rücken anliegt, durch eine Schaltbewegung an der Betätigungseinrichtung die Blockierstellung der Gasfeder nicht aufgehoben werden kann. Liegt aber die Rückenlehne am Rücken an, dann ermöglicht die Lastkontakteinrichtung über die Betätigungseinrichtung eine komfortable Rückenlehneneinstellung, wobei ein Anschlagen der Rückenlehne durch den bereits vorliegenden Kontakt am Rücken nicht mehr eintreten kann.

In weiterer vorteilhafter Ausgestaltung weist die Lastkontakteinrichtung einen relativ zur Gasfeder beweglichen Schieber auf, wobei der Schieber ortsfest mit der Betätigungseinrichtung in Wirkverbindung steht. Bei einer belasteten Rückenlehne bewegt der Schieber die Betätigungseinrichtung in eine Position, aus der eine wirksame Betätigungsbewegung ablaufen kann.

Um stets eine definierte Betriebsstellung der Lastkontakteinrichtung zu gewährleisten, wird der Schieber von einer Feder in Richtung einer Losstellung der Lastkontakteinrichtung vorgespannt.

Die erfindungsgemäße Lastkontakteinrichtung soll nach Möglichkeit mit einer Standard-Gasfeder kombinierbar sein. Dafür ist in Ausführungsbeispielen ein Auslösestößel für die Ventileinrichtung in Axialrichtung zweigeteilt. Ein Teil des Auslösestößels ist serienmäßig in der Gasfeder enthalten. Ein weiterer Teil, der in etwa die axiale Länge der Lastkontakteinrichtung aufweist, kann dann als Adapter verwendet werden.

Um bei der Auswahl der Feder für die Lastkontakteinrichtung einen größeren konstruktiven Freiraum zu erhalten, weist die Lastkontakteinrichtung einen Federträger auf, der mit der Gasfeder axial fest verbunden ist. Alternativ könnte man die Feder auch auf einer Stirnfläche der Gasfeder angreifen lassen.

So kann vorgesehen sein, dass der Federträger von einer Schraubhülse gebildet wird. Die Schraubhülse ermöglicht eine Anpassung der Stellung der Lastkontakteinrichtung, um eventuelle Fertigungstoleranzen ausgleichen zu können.

Damit die Gasfeder eine zuverlässige Befestigung zu den Kontaktbaugruppen aufweist, begrenzt ein Axialanschlag den Verschiebeweg der Lastkontakteinrichtung.

Dabei kommt der Axialanschlag an dem Federträger zur Anlage.

Gemäß einem vorteilhaften Unteranspruch bilden der Schieber, ein Boden und der Axialanschlag ein Gehäuse der Lastkontakteinrichtung, in dem die Feder gekammert ist. Die Lastkontakteinrichtung kann folglich als Baueinheit unabhängig von der technischen Anwendung und der Gasfeder als separate Baugruppe gefertigt werden.

Zusätzlich bildet der Boden einen weiteren, dem ersten Axialanschlag entgegen gesetzt ausgerichteten Axialanschlag, so dass die Betriebsbewegung des Schiebers in beiden Richtungen begrenzt ist und die Feder nicht unbedingt auf Block vorgespannt wird.

Bei einer besonders einfachen Ausführungsvariante stützt sich die Feder der Lastkontakteinrichtung am Zylinder ab. Die großen Vorteile dieser Lösung bestehen darin, dass man auf ein separates Gehäuse verzichten kann und im Vergleich zu einem konventionellen Kolben-Zylinderaggregat praktisch keinen Hubverlust durch die Verwendung der Lastkontakteinrichtung hinnehmen muss.

In weiterer vorteilhafter Ausgestaltung ist der Federträger am Zylinder befestigt, wobei sich die Feder an der Einheit aus Schieber und Auslöseeinrichtung abstützt.

Es ist vorgesehen, dass der Schieber auf der Kolbenstange gelagert ist. Die Kolbenstange verfügt über eine sehr hochwertige Oberfläche, so dass eine gute Führung gegeben ist. Des weiteren kann man auf ein Befestigungsgewinde für die Lastkontakteinrichtung verzichten.

Anhand der folgenden Figurenbeschreibung soll die Erfindung näher erläutert werden.

Es zeigt:
- Fig. 1: Anwendungsbeispiel für die Erfindung
- Fig. 2: Gasfeder mit Lastkontakteinrichtung als Baugruppe
- Fig. 3 - 5: Ausführungsbeispiel mit konzentrischer Feder zur Kolbenstange

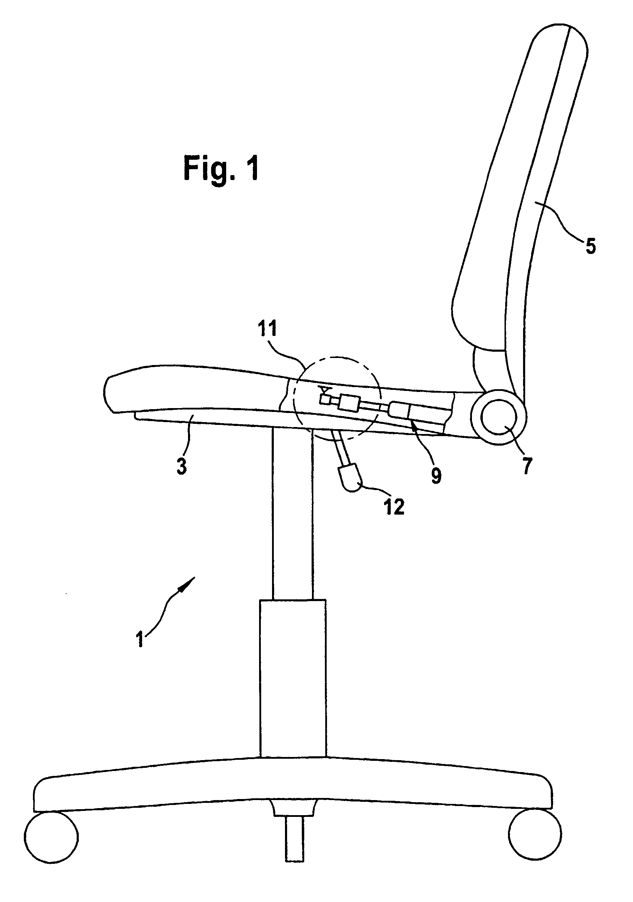

Die Figur 1 zeigt einen Stuhl 1, an dessen Sitzträger 3 eine Rückenlehne 5 um ein Lager 7 schwenkbeweglich gelagert ist. Funktional zwischen der Rückenlehne 5 und dem Sitzträger 3 ist ein Kolben-Zylinderaggregat 9 in der Bauform einer Gasfeder angeordnet. Die Gasfeder 9 kann über eine Auslöseeinrichtung 11, von der nur ein Betätigungshebel 13 dargestellt ist, in eine Blockier- oder eine Freigangstellung geschaltet werden.

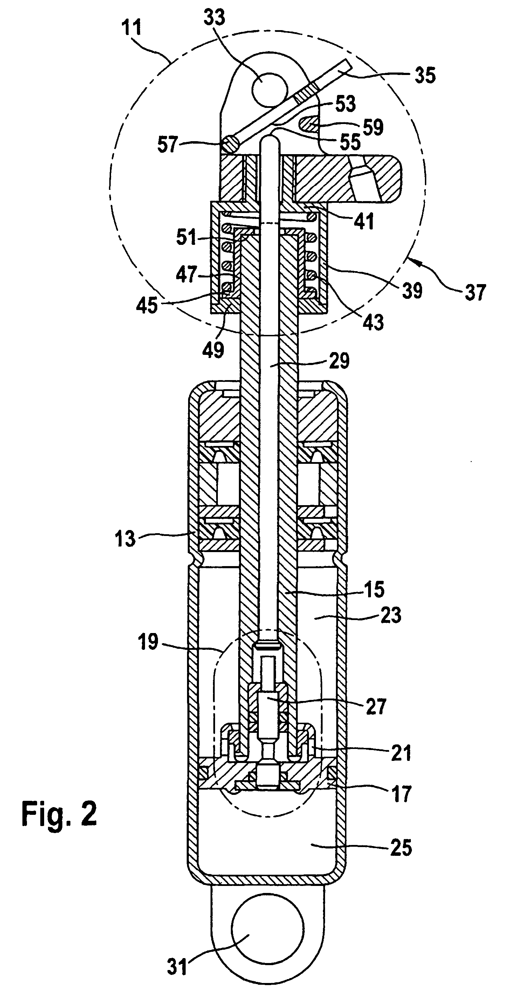

In der Fig. 2 ist die Gasfeder 9 mit der Auslöseeinrichtung 11 als Baugruppe vergrößert dargestellt. Innerhalb eines mit einem Druckgas gefüllten Zylinders 13 ist eine Kolbenstange 15 axial beweglich angeordnet. An dem innerhalb des Zylinders befindlichen Ende der Kolbenstange 15 ist ein Trennkolben 17 angeordnet, der wiederum eine Ventileinrichtung 19 aufweist. Die Ventileinrichtung 19 beeinflusst eine Strömungsverbindung 21 zwischen von dem Kolben getrennten Arbeitsräumen 23,25. Ein Ventilstößel 27 der Ventileinrichtung 19 kann über einen Auslösestößel 29 innerhalb der hohlen Kolbenstange 15 über das außenseitige Ende der Kolbenstange betätigt werden.

Bei geschlossener Ventileinrichtung 19 ist die Kolbenstangenbewegung in beiden Axialrichtungen gehemmt, hingegen wirkt bei geöffneter Strömungsverbindung 21 eine Druckkraft auf die Kolbenstange 15 in Ausfahrrichtung.

Der Zylinder 13 und die Auslöseeinrichtung 11 weisen jeweils ein Anschlussorgan 31; 33 auf, über die die Gasfeder zwischen der Rückenlehne 5 und dem Sitzträger 3 befestigt ist.

Die an der Kolbenstange 15 angeordnete Auslöseeinrichtung 1 umfasst neben einer Betätigungseinrichtung 35 und dem Anschlussorgan 33 eine Lastkontakteinrichtung 37. Diese Lastkontakteinrichtung weist einen Schieber 39 auf, der axial zu der Kolbenstange 15 eine Relativbewegung ausführen kann. Dazu wird der Schieber 39 zusammen mit einem Boden 41 von einer Feder 43, die sich auf einem Federträger 45 abstützt, vorgespannt. Der Federträger 45 wiederum ist Teil einer Schraubhülse 47, die an der Kolbenstange 15 befestigt ist. Ein Axialanschlag 49 hintergreift den Federträger 45, so dass die Verschiebebewegung des Schiebers von dem maximal möglichen Abstand zwischen dem Boden 41 und einer Stirnfläche 51 der Kolbenstange 15 bestimmt wird. Der Schieber 39, der Boden 41 und der Axialanschlag 49 bilden ein Gehäuse, in dem die Feder 43 gekammert ist, wobei das Gehäuse eine unabhängig von der Gasfeder 9 herstellbare Baugruppe darstellt.

Bei einer unbelasteten Gasfeder 9 entsprechend der Darstellung der Figur 2 liegt aufgrund der Federkraft der Feder 43 zwischen einer Druckfläche 53 der Betätigungseinrichtung 35 und einer Stirnfläche 53 des Auslösestößels 29 ein Abstand vor, der größer oder gleich dem maximalen Abstand zwischen dem Boden 41 und der Stirnfläche 51 der Kolbenstange 15 ist. Damit nimmt die Lastkontakteinrichtung eine Losstellung ein. Ein Schwenklager 57 der Betätigungseinrichtung 35 ist axial ortsfest zur Lastkontakteinrichtung 37, nämlich dem Boden 41 und dem Schieber 39 angeordnet, so dass eine Verschiebebewegung der Lastkontakteinrichtung 37 synchron mit der Betätigungseinrichtung 35 ausgeführt wird. Wird die Betätigungseinrichtung 35 in Richtung des Auslösestößels 29 bewegt, so kann allenfalls ein Kontakt mit dem Auslösestößel 29 hergestellt werden. Eine weitere Betätigungsbewegung wird von einem nur prinzipiell dargestellten Anschlag 59 der Auslöseeinrichtung 11 verhindert. Folglich kann die Ventileinrichtung 19 innerhalb der Gasfeder 9 nicht umgeschaltet werden.

Bei einer belasteten Gasfeder, z. B. wenn sich eine Person an die Rückenlehne anlehnt, wird das Anschlussorgan 33 zusammen mit der Lastkontakteinrichtung 37 und der Betätigungseinrichtung 35 in Richtung des Auslösestößels 29 verschoben, wobei der Boden 41 der Lastkontakteinrichtung 37 auf der Stirnfläche 51 der Kolbenstange 15 zur Anlage kommt. Die Feder 43 muss keinesfalls die Last an der Rückenlehne 5 abstützen, sondern nur eine Freischaltkraft aufbringen, um die Lastkontakteinrichtung wieder zu lösen. Wird nun die Betätigungseinrichtung 35 aktiviert, so kann u. U. ein geringer Leerweg zu überwinden sein, der Fertigungstoleranzen ausgleicht, aber ansonsten wird über die Betätigungseinrichtung und dem daran anliegenden Auslösestößel 19 die Ventileinrichtung 27 in eine Freiseinstellung bewegt. Die damit verbundene Ausschubkraft auf die Kolbenstange 15 kann kein Anschlagen der Rückenlehne an die Person bewirken, da bereits ein Kontakt vorliegt.

Die Lastkontakteinrichtung 37 muss nicht zwangsläufig an der Kolbenstange 15 angeordnet sein, sondern kann auch sinnvollerweise am Zylinder 13 angreifen, wenn z. B. die Ventileinrichtung 27 im Bereich des zylinderseitigen Anschlussorgans 31 ausgeführt ist.

Es kann auch sinnvoll sein, wenn man den Auslösestößel 29 zweigeteilt ausführt, wie mit der gestrichelten Linie angedeutet werden soll. Man kann dann nämlich ohne Änderung eine Standard-Gasfeder verwenden und die Lastkontakteinrichtung zusammen mit einem weiteren Längenabschnitt eines Auslösestößels verwenden.

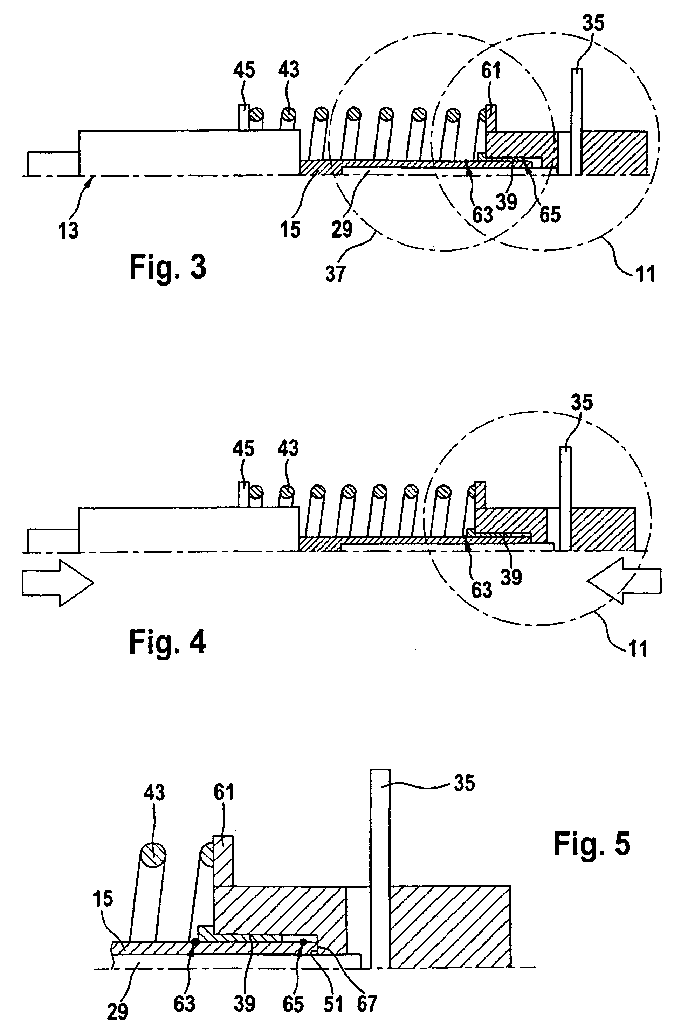

Die Fig. 3 zeigt ein Ausführungsbeispiel der Erfindung, bei der der Schieber 39 der Lastkontakteinrichtung 37, siehe Fig. 5, nahezu vollständig innerhalb der Auslöseeinrichtung 11 angeordnet ist, und unmittelbar auf der Kolbenstange 15 gelagert ist. An der Auslöseeinrichtung 11 ist ein Federteller 61 angeordnet, an dem sich die Feder 43, wie mit ihrem anderen Ende am Federträger 45, zylinderseitig abstützt. Zwei Axialanschläge 63, 65, die als Sicherungsringe an der Kolbenstange 15 befestigt sind, begrenzen den Verschiebeweg des Schiebers 39. Man kann auch vorsehen, dass sich die Auslöseeinrichtung 11 mit ihrem Boden 67 an der Stirnfläche 51 der Kolbenstange abstützt und damit der Axialanschlag realisiert wird.

Zur Montage wird der Schieber 39 auf die Kolbenstange 15 gefädelt. Anschließend wird der Axialanschlag 65 an der Kolbenstange montiert. Im nächsten Schritt wird der Schieber 39 bis zum Axialanschlag 65 geschoben und der andere Axialanschlag 63 befestigt. Abschließend schiebt man die Auslöseeinrichtung 1 auf den Schieber 39, wobei eine Press- oder Gewindeverbindung zwischen der Auslöseeinrichtung und dem Schieber wirksam wird.

In der Fig. 3 ist das Kolben-Zylinderaggregat unbelastet dargestellt, so dass die Feder 43 die Auslöseeinrichtung 11 zusammen mit dem Schieber 39 an den Axialanschlag 65 vorspannt. Die Betätigungseinrichtung 35 ist nun soweit von dem Auslösestößel 29 verschoben, dass dieser nicht mehr angesteuert werden kann.

In der Fig. 4 sind Kraftpfeile eingezeichnet, die eine Druckbelastung auf das Kolben-Zylinderaggregat, z. B. dann, wenn eine Person die Rückenlehne 5, siehe Fig. 1, belastet, symbolisieren sollen. Die äußeren Kräfte verschieben die Auslöseeinrichtung 11 zusammen mit dem Schieber 39 gegen die Kraft der Feder 43, bis die Auslöseeinrichtung über den Schieber am Axialanschlag 63 zur Anlage kommt. In dieser Betriebsstellung der Auslöseeinrichtung 11 kann der Auslösestößel 29 über die Betätigungseinrichtung 35 angesteuert werden.

## Patentansprüche

1. Gasfeder (9), umfassend eine Ventileinrichtung (27) für die Betriebsbewegung einer Kolbenstange (15), wobei die Ventileinrichtung (27) über eine Auslöseeinrichtung (11) ansteuerbar ist und wobei die Auslöseeinrichtung (11) neben einer Betätigungseinrichtung (35) ein Lastkontakteinrichtung (37) umfaßt, durch die eine Verbindung zwischen der Betätigungseinrichtung (35) und der Ventileinrichtung (27) herstellbar ist, **dadurch gekennzeichnet, dass** die Lastkontakteinrichtung (37) so ausgebildet ist, dass sie bei einer belasteten Gasfeder (9) die Betätigungseinrichtung (35) mit der Ventileinrichtung (27) verbindet, und dass bei unbelasteter Gasfeder (9) die Ventileinrichtung (27) nicht umgeschaltet werden kann.

2. Gasfeder nach Anspruch 1,
**dadurch gekennzeichnet,**
**dass** die Lastkontakteinrichtung (37) einen relativ zur Gasfeder (9) beweglichen Schieber (39) aufweist, wobei der Schieber (39) ortsfest mit der Betätigungseinrichtung (35) in Wirkverbindung steht.

3. Gasfeder nach Anspruch 2,
**dadurch gekennzeichnet, dass** der Schieber von einer Feder (43) in Richtung einer Losstellung der Lastkontakteinrichtung (37) vorgespannt wird.

4. Gasfeder nach einem der Ansprüche 1-3,
**dadurch gekennzeichnet,**
**dass** ein Auslösestößel (29) für die Ventileinrichtung (27) in Axialrichtung zweigeteilt ist.

5. Gasfeder nach Anspruch 3,
**dadurch gekennzeichnet,**
**dass** die Lastkontakteinrichtung (37) einen Federträger (45) aufweist, der mit der Gasfeder (9) axial fest verbunden ist.

6. Gasfeder nach Anspruch 5,
**dadurch gekennzeichnet,**
**dass** der Federträger (45) von einer Schraubhülse (47) gebildet wird.

7. Gasfeder nach einem der Ansprüche 2-6,
**dadurch gekennzeichnet,**
**dass** der Schieber (39) einen Axialanschlag (49) aufweist, der den Verschiebeweg der Lastkontakteinrichtung (37) begrenzt.

8. Gasfeder nach Anspruch 7,
**dass** der Axialanschlag (41) an dem Federträger (45) zur Anlage kommt.

9. Gasfeder nach einem der Ansprüche 7 oder 8,
**dadurch gekennzeichnet,**
**dass** der Schieber (39), ein Boden (41) und der Axialanschlag (49) ein Gehäuse bilden, in dem die Feder (43) gekammert ist.

10. Gasfeder nach Anspruch 9,
**dadurch gekennzeichnet,**
**dass** der Boden (41) einen weiteren, dem ersten Axialanschlag (49) entgegen gesetzt ausgerichteten Axialanschlag bildet, so dass die Betriebsbewegung des Schiebers (39) in beiden Richtungen begrenzt ist.

11. Gasfeder nach Anspruch 3,
**dadurch gekennzeichnet,**
**dass** sich die Feder (43) am Zylinder (13) abstützt.

12. Gasfeder nach Anspruch 5,
**dadurch gekennzeichnet, dass** der Federträger (45) am Zylinder (13) befestigt ist.

13. Gasfeder nach Anspruch 3,
**dadurch gekennzeichnet,**
**dass** sich die Feder (43) an der Einheit aus Schieber (39) und Auslöseeinrichtung (11) abstützt.

14. Gasfeder nach Anspruch 3,
**dadurch gekennzeichnet,**
**dass** der Schieber (39) auf der Kolbenstange (15) gelagert ist.

## Claims

1. Gas spring (9), comprising a valve device (27) for the operational motion of a piston rod (15), it being possible to activate the valve device (27) by means of an activation device (11) and the activation device (11) comprising not only an actuation device (35) but also a load contact device (37), which can produce a connection between the actuation device (35) and the valve device (27), **characterized in that** the load contact device (37) is designed in such a way that, in the case of a loaded gas spring (9), it connects the actuation device (35) to the valve device (27) and **in that**, in the case of an unloaded gas spring (9), the valve device (27) cannot be switched.

2. Gas spring according to Claim 1, **characterized in that** the load contact device (37) has a slide (39) which can move relative to the gas spring (9), the slide (39) being in effective connection with the actuation device (35) at a fixed location.

3. Gas spring according to Claim 2, **characterized in that** the slide is preloaded by a spring (43) in the direction of a disengaged position of the load contact device (37).

4. Gas spring according to one of Claims 1 to 3, **characterized in that** an activation push-rod (29) for the valve device (27) is divided in two in the axial direction.

5. Gas spring according to Claim 3, **characterized in that** the load contact device (37) has a spring support (45), which is firmly connected axially to the gas spring (9).

6. Gas spring according to Claim 5, **characterized in that** the spring support (45) is formed by a threaded sleeve (47).

7. Gas spring according to one of Claims 2 to 6, **characterized in that** the slide (39) has an axial stop (49), which limits the displacement path of the load contact device (37).

8. Gas spring according to Claim 7, **characterized in that** the axial stop (49) comes into contact with the spring support (45).

9. Gas spring according to either of Claims 7 and 8, **characterized in that** the slide (39), an end (41) and the axial stop (49) form a casing, in which the spring (43) is enclosed.

10. Gas spring according to Claim 9, **characterized in that** the end (41) forms a further axial stop acting in a direction opposite to that of the first axial stop (49), so that the operational movement of the slide (39) is limited in both directions.

11. Gas spring according to Claim 3, **characterized in that** the spring (43) is supported on the cylinder (13).

12. Gas spring according to Claim 5, **characterized in that** the spring support (45) is fastened to the cylinder (13).

13. Gas spring according to Claim 3, **characterized in that** the spring (43) is supported on the unit composed of the slide (39) and the activation device (11).

14. Gas spring according to Claim 3, **characterized in that** the slide (39) is supported on the piston rod (15).

## Revendications

1. Ressort à gaz (9), comprenant un dispositif de soupape (27) pour le mouvement de fonctionnement d'une tige de piston (15), le dispositif de soupape (27) pouvant être commandé par le biais d'un dispositif de déclenchement (11) et dans lequel le dispositif de déclenchement (11) comprend, outre un dispositif d'actionnement (35), un dispositif de contact de charge (37), qui permet de créer une liaison entre le dispositif d'actionnement (35) et le dispositif de soupape (27), **caractérisé en ce que** le dispositif de contact de charge (37) est réalisé de telle sorte qu'il relie le dispositif d'actionnement (35) au dispositif de soupape (27) lorsqu'un ressort à gaz (9) est sollicité et **en ce que** le dispositif de soupape (27) ne peut pas être inversé lorsque le ressort à gaz (9) n'est pas sollicité.

2. Ressort à gaz selon la revendication 1,
**caractérisé en ce que**
le dispositif de contact de charge (37) présente un tiroir (39) mobile par rapport au ressort à gaz (9), le tiroir (39) étant fixement en liaison coopérante avec le dispositif d'actionnement (35).

3. Ressort à gaz selon la revendication 2,
**caractérisé en ce que**
le tiroir est précontraint par un ressort (43) dans la direction d'une déconnexion du dispositif de contact de charge (37).

4. Ressort à gaz selon l'une quelconque des revendications 1 à 3,
**caractérisé en ce qu'un**
poussoir de déclenchement (29) pour le dispositif de soupape (27) est divisé en deux dans la direction axiale.

5. Ressort à gaz selon la revendication 3,
**caractérisé en ce que**
le dispositif de contact de charge (37) présente un support de ressort (45) qui est connecté fixement axialement au ressort à gaz (9).

6. Ressort à gaz selon la revendication 5,
**caractérisé en ce que**
le support de ressort (45) est formé par une douille filetée (47).

7. Ressort à gaz selon l'une quelconque des revendications 2 à 6,
**caractérisé en ce que**
le tiroir (39) présente une butée axiale (49) qui limite la course de déplacement du dispositif de contact de charge (37).

8. Ressort à gaz selon la revendication 7,
**caractérisé en ce que**
la butée axiale (49) vient en appui contre le support de ressort (45).

9. Ressort à gaz selon l'une quelconque des revendications 7 ou 8,
**caractérisé en ce que**
le tiroir (39), un fond (41) et la butée axiale (49) forment un boîtier dans lequel le ressort (43) est logé.

10. Ressort à gaz selon la revendication 9,
**caractérisé en ce que**
le fond (41) forme une autre butée axiale orientée à l'opposé de la première butée axiale (49), de sorte que le mouvement de fonctionnement du tiroir (39) soit limité dans les deux directions.

11. Ressort à gaz selon la revendication 3,
**caractérisé en ce que**
le ressort (43) s'appuie sur le cylindre (13).

12. Ressort à gaz selon la revendication 5,
**caractérisé en ce que**
le support de ressort (45) est fixé sur le cylindre (13).

13. Ressort à gaz selon la revendication 3,
**caractérisé en ce que**
le ressort (43) s'appuie sur l'unité constituée du tiroir (39) et du dispositif de déclenchement (11).

14. Ressort à gaz selon la revendication 3,
**caractérisé en ce que**
le tiroir (39) est monté sur la tige du piston (15).
